# EUROPEAN PATENT APPLICATION

(11) **EP 2 372 529 A1**
(43) Date of publication of application: **05.10.2011**
(21) Application number: 11159034.5
(22) Date of filing: 21.03.2011
(51) Int. Cl.: G06F 9/318, G06F 9/32, G06F 9/38

(54) **System and method for grouping alternative instructions in an instruction path**

(30) Priority: 22.03.2010 US 728319
(71) Applicant: Ceva D.S.P. Ltd., 46120 Herzlia Pituach (IL)
(72) Inventor: Fishel Liran, Raanana (IL); Rubinsky, Tamir, Savyon (IL)
(74) Representative: Hutchinson, Glenn Stanley

(57) **Abstract**

A method, system and device is provided for processing digital data, for example, video, image, and media data. A dispatch unit may simultaneously issue a plurality of instructions to an execution unit. The instructions may correspond to different mutually exclusive outcomes of a common condition. A processor may determine the actual outcome of the common condition. An execution unit may execute the one of the plurality of instructions which corresponds to the actual outcome of the condition and discard the remaining simultaneously issued instructions.

## Description

### BACKGROUND OF THE INVENTION

Embodiments of the invention relate to methods and systems for processing instructions. In particular, embodiments of invention relate to combining a plurality of alternative possible instructions each of which correspond to a different outcome of a conditional path to reduce the number of computational cycles for resolving the path.

A computing device may process a sequence of instructions. Some instructions may have a plurality of different possible outcomes and each different outcome may lead to a different path of subsequent instructions.

In one example, different subsequent instruction may be executed depending on the outcome of a comparison, for example, determining if value [a] is less than value [b]. For example, an add instruction may add values [d] and [e] if the outcome is true, i.e., if value [a] is less than value [b], and a separate multiply instruction may multiply values [d] and [e] if the outcome is false, i.e., if value [a] is not less than value [b]. Since the add and multiply instructions relate to mutually exclusive outcomes of the same comparison, i.e., true or false, only one of the instructions may be executed based on the comparison.

In some systems, an execution unit may only be able to execute one instruction in each computational cycle. For example, an arithmetic logic unit may either add or multiply, but can not both add and multiply, in a single cycle. To account for this limitation, for example, when large data packets are used, such as "very long instruction word" (VLIW) packets, current VLIW architectures only issue a single instruction to an execution unit in each cycle. Thus, when there are a plurality of alternative possible instructions that depend on the same outcome, each instruction is issued to the execution unit in a separate computational cycle. To execute the correct one of the plurality of possible instructions, each instruction is executed individually, sequentially in a separate computational cycle at a single execution unit or in parallel at a plurality of execution units, until the condition that determines the correct instruction is found.

In the example above, there are two possible outcomes of the comparison, i.e., true and false, and the instruction path to add or multiple takes two separate cycles to resolve. In more complex scenarios where there are many, for example, five, ten, or hundreds of possible outcomes, each of the many corresponding possible instructions may be executed individually, for example, using five, ten, or hundreds of computational cycles. Since only one outcome is possible, only one of the instructions is actually executed. Meanwhile, the execution unit runs idle in all but one computational cycle, thereby wasting a great amount of time and computational resources to resolve the instruction path.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings. Specific embodiments of the present invention will be described with reference to the following drawings, wherein:

Fig. **1** is a schematic illustration of an exemplary device in accordance with embodiments of the invention;

Figs. **2A** and **2B** are tables showing processor operations for executing a plurality of mutually exclusive instructions using a single execution unit in a conventional system;

Figs. **2C** and **2D** are tables showing processor operations for executing a plurality of instructions using a single execution unit in accordance with embodiments of the invention; and

Fig. **3** is a flowchart of a method in accordance with embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

When used herein, instructions are said to be "alternative" when they correspond to mutually exclusive outcomes of the same condition, depend or branch from the same condition, outcome, or instruction path, may be determined correct or incorrect based on the same or overlapping previous instruction(s), or when at most one of the instructions may be executed, for example, based on the outcome of a common condition. The alternative instructions may or may not be listed sequentially in a program process.

Embodiments of the invention may include combining and simultaneously issuing a plurality of alternative conditional instructions together in a single computational cycle, where each alternative instruction corresponds to a different or mutually exclusive outcome of the same condition. The alternative instructions may be combined or grouped manually in the instruction code, for example, by a programmer, or automatically, for example, during program runtime by a decode and/or dispatch unit capable of identifying and combining corresponding alternative instructions.

Together the combined instructions may correspond to some or all possible outcomes of a condition. A dispatch unit may issue the combined instructions together to an execution unit. Since only one instruction in a set of alternative instructions may be valid for execution, the combined instructions may include at most one correct executable instruction (and possibly no executable instruction). Thus, an execution unit, which typically only has the hardware resources to execute a single instruction in each computational cycle, may handle multiple instructions by executing, at most, the one valid instruction and discarding the remaining invalid alternative instructions in the combined set.

In some embodiments, a processor, load/store unit, or memory controller may combine the instructions by storing them together in the same register or at the same memory address or location. In another embodiment, a dispatch unit may combine instructions from multiple memory addresses by issuing them to an execution unit together, substantially simultaneously, or in the same computational cycle, or by merging the instructions into a single (for example, VLIW) data packet or string. The dispatch unit may issue all combined to the execution unit in the same computational cycle and/or as an inseparable data packet.

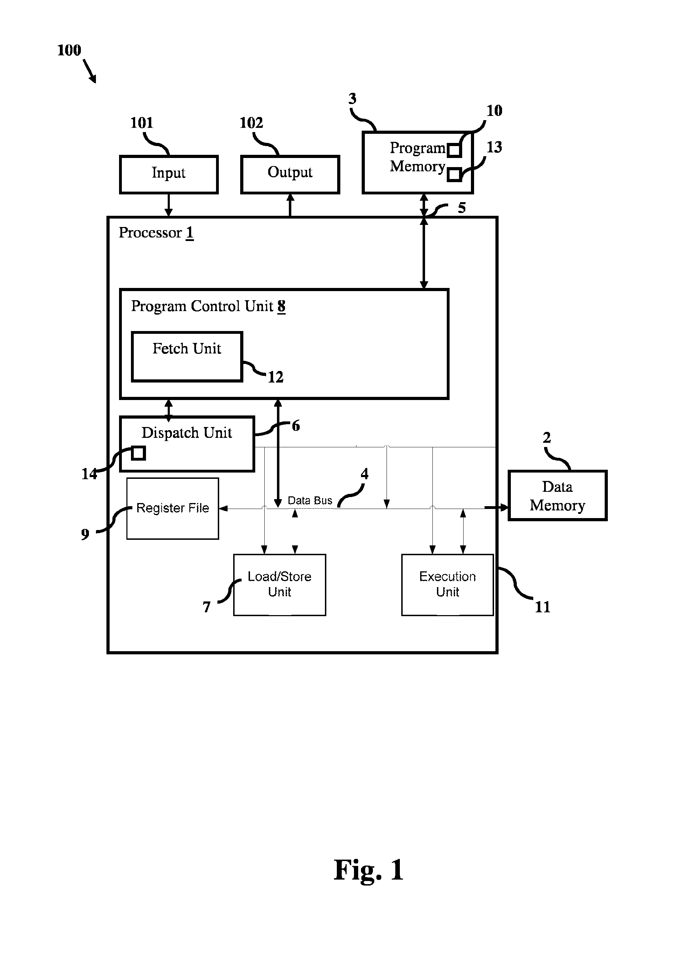

Reference is made to Fig. **1**, which is schematic illustration of an exemplary device according to embodiments of the invention. An exemplary device **100** may include a processor **1**, a data memory unit **2**, and a program memory unit 3.

Device **100** may include a computer device, cellular device, or any other digital device such as a cellular telephone, personal digital assistant (PDA), video game console, etc. Device **100** may include any device capable of executing a series of instructions to run a computer program. Device **100** may include an input device **101** for receiving input from a user (e.g., via a pointing device, click-wheel or mouse, keys, touch screen, recorder/microphone using voice recognition, other input components). Device **100** may include an output device **102** (e.g., a monitor or screen) for displaying a program on a user interface according to a sequence of instructions executed by a processor **1**.

Processor **1** may include a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific processor or controller.

Processor **1** may be coupled to data memory unit **2** via a data bus **4** and to program memory unit **3** via a program memory bus **5**.

Program memory unit **3** may store a set of instructions and rules for running a computer program while data memory unit **2** may store data generated while operating the program instructions such as pre-generated (i.e. static) data and/or scratch pad (i.e. dynamic) data; however, other arrangements for storing instructions and data in a memory or memories may be used.

Data memory unit **2** and program memory unit **3** may include, for example, static random access memory (SRAM), dynamic RAM (DRAM), flash memory, or other suitable memory units or storage units, and may use volatile memory or non-volatile memory. Data memory unit **2** and program memory unit **3** may be implemented as separate or integrated memory units. Data memory unit **2** and/or program memory unit **3** may be integrated ("on-chip") or may be separate (i.e., "off-chip"). In one embodiment in which there is a multilevel memory or a memory hierarchy, program memory unit **3** may be off-chip and data memory unit **2** may be on-chip, e.g., an L-1 cache (e.g., which is relatively more integrated with processor **1** than an L-2 cache and typically runs at the clock rate of processor **1**) or an L-2 cache (e.g., which is relatively less integrated than the L-1 cache and typically runs at a different rate than the clock rate of processor **1**). Other or additional memory architectures may be used.

Processor **1** may include a program control unit **8**. Program control unit **8** may request, retrieve, and dispatch instructions from program memory unit **3** and may be responsible, in general, for the program pipeline flow. Program control unit **8** may include a data memory controller (not shown) coupled to data memory bus **4**, and a program memory controller (not shown) coupled to program memory bus **5** to retrieve data from data memory unit **2** and program memory unit **3**, respectively.

Processor **1** may include one or more fetch unit(s) **12** and dispatch unit(s) **6**. Fetch unit **12** may fetch a group or line of instructions from program memory **3** in each cycle. Once the instructions are fetched, program control unit **8** may read and extract instruction packets from the fetched line of instructions and send the instructions to dispatch unit **6**. Dispatch unit **6** may dispatch and decode the instructions.

Processor **1** may include one or more execution units **11**, such as load/store unit(s) **7** and/or program control unit **8**. Execution unit(s) **11** may execute instructions. Each execution unit **11** may be designated for a particular function. For example, execution unit(s) **11** may be an arithmetic logic unit (ALU) designated for executing arithmetic operation, such as add, multiple, divide, etc. Program control unit (PCU) **8** may be designated for executing branch type instructions, such as, for example, branch (pcu.br), function call (pcu.call), and function return (pcu.ret). Load store unit (LSU) **7** may be designated for executing load/store type instructions from/to data memory unit **2**. Other functions may be executed by each type of execution unit. Load store unit (LSU) **7**, arithmetic logic unit (ALU), and/or program control unit (PCU) **8** may be integral to or separate from execution unit **11**.

Processor **1** may include register files **9** to implement tags to efficiently access previously calculated values, for example, in the same computational cycle as they are requested. Register files **9** may include entries, flags, predicate registers, mode registers, or other indicators of the outcome of a condition, a comparison, or one or more previously executed instructions. Mode registers may be used to configure processor **1**, for example, to configure the behavior of instructions or interrupts. Predicate registers may indicate the outcome of a condition, for example, the result of a compare instruction. When the condition is known, execution unit **11** may update register file **9**. When a current instruction depends on the condition, comparison, or previously executed instructions, execution unit **11** may read the flag, predicate or mod register or other indicator from a register file **9** in order to determine whether or not, or in which manner, to execute the current instruction. Execution unit **11** may read the indicator in the same computational cycle in which the instruction is decoded.

Processor **1** may execute, for example, the following sequential pipeline stages for each instruction:
● IF1 - program memory address (operated by program control unit **8**)
● IF2 - program memory fetch (operated by fetch unit **12**)
● D1 - instruction dispatch (operated by program control unit **8**)
● D2 - instruction decode (operated by dispatch unit **6**)
● D3 - register file read (using register files **9**)
● E1 to E4 - execute, data memory access, and register file write-back (operated by execution unit **11**, load/store unit **7**, and register files **9**).

It should be understood to a person skilled in the art, however, that embodiments of the invention are not limited to any specific sequence and other or additional pipeline stages and operating device components may be used.

Program control unit **8** may process a sequence of program instructions stored in program memory unit **3**. In operation (IF1), program control unit **8** may indicate a single program memory address for executing the one or more instruction(s) stored therein in each computational cycle. Program control unit **8** may address sequential memory addresses (e.g., 100, 101, 102, ...) for executing a sequence of instructions (e.g., A, A+1, A+2, ...) or may instead jump to non-sequential addressed (e.g., 200, 201, 202, ...) for executing non-sequential instructions (e.g., IA+1, IA+2, IA+3, ...). For example, when there is a conditional instruction in a program sequence, such as a compare, a branch, or a loop instruction, depending on the outcome of the condition, the process may proceed in any of a plurality of different paths of subsequent instructions.

According to embodiments of the invention, processor **1** may store the plurality of different alternative subsequent instructions [A+1] and [A+2] in program memory unit **3**. Processor **1** may store the instructions together as a single combined instruction set [A+1*] in a single memory address **10**, for example, address 101, of program memory unit **3**. The instructions [A+1] and [A+2] in the combined instruction set [A+1*] may be merged together, for example, as a single instruction joined by a joining clause in the instruction code such as 'and,' 'or,' '∥', etc., or may be written separately, for example, one after another. In different embodiments, the single memory address **10** may include the actual combined instructions or alternatively, may include links to secondary addresses where the actual instructions may be stored. In another embodiment, the alternative instructions may be stored in separate memory locations **10** and **13** and may be combined when dispatch unit **6** buffers the instructions for issue to execution unit **11**.

In operation (IF2), fetch unit **12** may fetch the instructions from the memory address(es) **10** and/or **13** indicated in operation (IF1), which may include, for example, a plurality of mutually exclusive alternative instructions.

In operation (D1), dispatch unit **6** may combine the plurality of mutually exclusive alternative instructions and send the instructions to execution unit **11**. Dispatch unit **6** may combine instructions [A+1] and [A+2] by storing them in a single memory address **14**, for example, a register or buffer in dispatch unit **6**, to be issued together. Dispatch unit **6** may issue all instructions stored in each memory address **14** to a single execution unit **11**, for example, as a single combined instruction set [A+1*] in a single computational cycle. Processor **1**, program control unit **8**, decoder and/or dispatch unit **6** may determine which instructions to combine in memory address **14**, for example, based on the instruction type, a common condition or indicating a common flag or predicate register, and/or their storage location **10** and/or **13** in program memory unit **3**. Other criteria may be used.

In some embodiments, the combined instruction set may be designated for execution units 11 with different functions. For example, arithmetic type instructions may be sent to an ALU, load/store type instructions may be sent to load/store unit **7**, and branch or other type of instructions may be sent to the PCU. In one example, a combined instruction set may be: (alu.mul r6,r7 ∥ alu.add r3,r9 ∥ 1su.1d r4). In this example, both instructions (alu.mul r6,r7) and (alu.add r3,r9) indicate the execution unit, 'alu,' and are therefore sent together to the ALU, while a single instruction (1su.1d r4) indicates the execution unit, '1su,' and is therefore sent alone to the LSU.

When dispatch unit **6** issues a plurality of combined instructions to a single execution unit **11**, the execution unit **11** may handle all issued instructions together, simultaneously, or in the same computational cycle. Although each execution unit **11** may only have the hardware resources to execute one instruction at a time, since dispatch unit **6** sends instructions from memory address **14** that are mutually exclusive, the combined instruction set may include at most one valid instruction, but no more than one valid instruction. Accordingly, a single execution unit **11** may handle all of the instructions in the combined instruction set in a single computational cycle.

In contrast with conventional systems, in which a dispatch unit issues each instruction to a single execution unit, according to embodiments of the invention, dispatch unit **6** may issue a plurality of mutually exclusive instructions together to a single execution unit **11**. A conventional dispatch unit may include a dispatch buffer in which only a single instruction may be stored at each address for issue to a single execution unit, while according to embodiments of the invention, dispatch unit **6** may include a dispatch buffer that stores a plurality of mutually exclusive instructions together at a single memory address **14** to be issued together to a single execution unit **11**.

In the decode stage (D2), execution unit **11** may read the issued instructions and, based on the outcome of the condition, execute the one corresponding valid instruction (if any). The outcome of the condition may be indicated, for example, by a pre-designated flag, predicate register, mode register, or other indicator of the outcome of a condition or branch instruction. The indicators may be stored in register file **9**, one or more memory units such as data memory **2**, buffers, tables, branch mechanisms, or may be a result or output of previous instruction(s). A flag or predicate register typically has two alternative outcomes: true or false; zero (0) or one (1). Each instruction may correspond to a different respective outcome of the flag or predicate register. For example, the combined instruction set [A+1 *] may include instructions [A+1] and [A+2], where execution unit **11** may only execute instruction [A+1] when a flag is 'true' and may only execute instruction [A+2] when the same flag is 'false'. Execution unit **11** may read the flag and execute the one corresponding valid instruction and discard the remaining invalid or non-corresponding instruction(s) in the combined instruction set.

In some embodiments, execution unit **11** may execute alternative instructions in the combined instruction set depending on a plurality of flags or indicators. The greater the number of indicators, the greater the number of possible alternative instructions. In one example, if each flag or predicate may have two possible outcomes, an integer number of flags or predicates, n, may have 2ⁿ possible outcomes. In another example, alternative instructions may correspond to an integer number, m, possible outcomes resulting from an arithmetic calculation varying from 1 to m. Accordingly, there may be any finite number of alternative possible instructions in a combined instruction set.

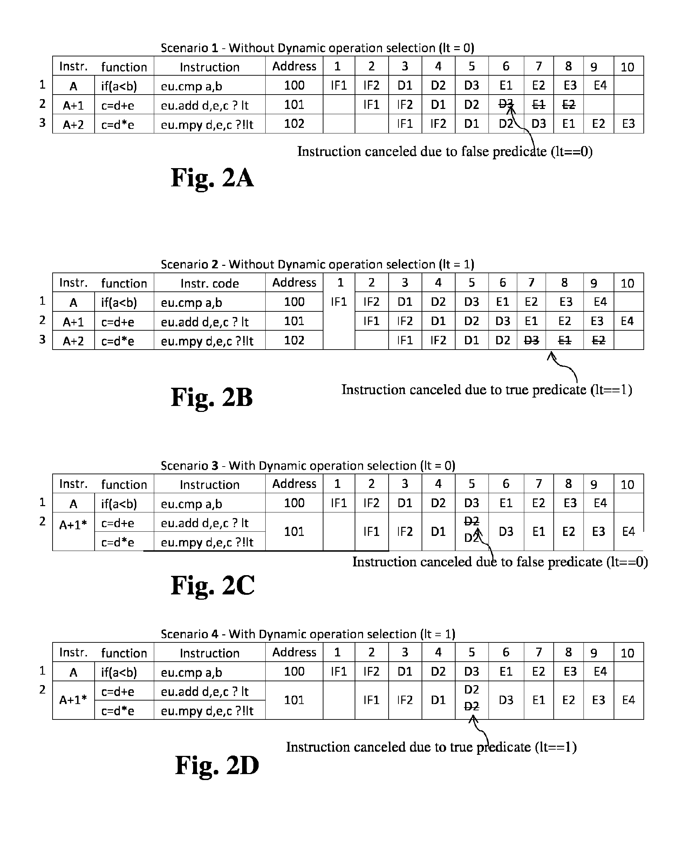

Reference is made to Figs. **2A-2D**, which are tables showing processor operations for executing a plurality of mutually exclusive instructions using a single execution unit. In Figs. **2A-2D**, each numbered row in the tables relates to a single instruction processed in a separate pipeline slot. The instructions (listed in the column labeled "instruction") having corresponding functions (listed in the column labeled "function") are ordered in sequential rows or slots 1-3 in the order in which they may be processed, i.e., in the order in which the instructions first enter the processor pipeline slot (e.g., in pipeline stage IF1).

Each sequential numbered column shows the pipeline stage or operation executed on the instructions that occur in each respective sequential computational cycle. That is, once an instruction in each row first enters the processor pipeline slot, in each sequential column, the processor may execute sequential stages of operations on the instruction, for example, program memory address (IF1), fetch (IF2), dispatch (D1), decode (D2), register file read (D3), execute, data memory access, and register file write-back (E1 to E4). Other or additional operations may be used.

In a demonstrative example, a program memory unit (e.g., program memory unit **3** of Fig. **1**) may operate a program to implement the following sequence of operations:

```
                 If (a<b) {
                   c = d + e
                 } else {
                   c=d*e
                 }
```

In order to implement these operations, the program memory unit may store the following sequence of instructions:

| | | |
|---|---|---|
| Instruction A: | eu.cmp a,b | // compare a and b and update the relevant flags |
| Instruction A+1: | eu.add d,e,c ? lt | // d + e → c if the 'less than' flag is true (lt==1) |
| Instruction A+2: | eu.mpy d,e,c ?!lt | // d * e → c if the 'less than' flag is false (lt==0) |

In this example, instruction [A+1] and [A+2] are alternative instructions that depend on the outcome of instruction [A]. However, it may be appreciated that the instructions in Figs. **2A** - **2D** are used for demonstrative purposes only and may be replaced with any two or more mutually exclusive or alternative instructions.

Figs. **2A** and **2B** show processor operations in a conventional system for executing a plurality of mutually exclusive instructions using a single execution unit. Fig. **2A** shows processor operations in a scenario in which value [a] is not less than value [b] and a 'less than' flag (1t) is false (1t==0) and Fig. **2B** shows processor operations in a scenario in which value [a] is less than value [b] and the 'less than' flag is true (1t==1).

In Figs. **2A** and **2B**, a processor may sequentially process three instructions, [A], [A+1], and [A+2] in respective pipeline slots (row 1, row 2, row 3). These instruction may be part of a larger sequence of instructions in a program, for example, A-n (not shown), ..., A (row 1), A+1 (row 2), A+2 (row 3), ... , A+m (not shown). Instructions [A+1] and [A+2] may be alternative instructions such that, although both instructions may be initially be queued and prepared for execution, an execution unit may only execute the single correct alternative of the instructions.

A processor may store instruction [A] at a first address in a program memory, for example, denoted arbitrarily to be address 100 (row 1, in the column labeled "address") and subsequent instructions [A+1], [A+2], ..., at different sequential addresses, for example, denoted arbitrarily to be 101, 102,... (rows 2 and 3, respectively, in the column labeled "address").

In the example shown in the figures, the execution unit (eu) may execute instruction [A], 'eu.cmp a,b,' denoting the function, if(a<b), to compare (cmp) value [a] and value [b] (a,b). Instruction [A] does not depend on any condition and, when it is issued to an execution unit, the execution unit always executes the instruction to completion. Since a single execution unit may only have the hardware capabilities to execute one instruction in each computational cycle, instructions [A] may be individually stored at a memory address (e.g., address 100), individually issued to the execution unit, and individually executed thereby (e.g., using the separate pipeline slot of row 1).

Depending on the outcome of the comparison, the execution unit may update one or more corresponding flags in a register file may be updated, for example, in the same computational cycle. For example, the 'less than' flag may be updated, which is true (1t==1) if value [a] is less than value [b] and false (1t==0) if value [a] is not less than value [b].

The execution unit may execute the next instruction, instruction [A+1], for example, 'eu.add d,e,c ? 1t,' denoting the add function, c=d+e, to add (add) value [d] and value [e] to get value [c], (d,e,c). The execution unit may only execute instruction [A+1] if (?) the 'less than' flag is true (1t=1).

The execution unit may execute the next instruction, instruction [A+2], for example, 'eu.mpy d,e,c ? !1t,' denoting the multiply function, c=d*e, to multiply (mpy) value [d] and value [e] to get value [c], (d,e,c). The execution unit may only execute instruction [A+2] if (?) the 'less than' flag is false (1t==0).

The execution unit may only execute each of alternative instructions [A+1] and [A+2] when a different respective outcome of the comparison of instruction [A] is satisfied. That is, regardless of the outcome of the comparison of instruction [A], the execution unit may only execute one of instructions [A+1] and [A+2].

Since conventional systems issue instructions to a single execution unit one at a time, instructions [A+1] and [A+2] each occupy a separate pipeline slot (indicated by separate rows 2 and 3). Both alternative instructions [A+1] and [A+2] may be processed in separate pipeline slots. When the actual outcome of the condition is determined (e.g., in pipeline stage (D2) when the flags in the register file are read), the execution unit may only execute the instruction that corresponds to the actual outcome (e.g., to finish pipeline stage D2 and continue to pipeline stage D3 until pipeline stage E4) and may annul or "kill" the instruction(s) corresponding to outcomes different than the actual outcome (e.g., indicated by a strike-through of the pipeline stage(s)).

If the comparison of instruction [A] is false (e.g., as shown in Fig. **2A**), the execution unit executes instruction [A+2] and discards instruction [A+1], while if the comparison is true (e.g., as shown in Fig. **2B**), the execution unit executes instruction [A+1] and discards instruction [A+2]. However, for both outcomes of the comparison, at least one instruction is discarded, causing the execution unit to stop processing and run idle during the computational cycle allocated for executing the discarded instruction. In Fig. **2A**, the execution unit runs idle during the computational cycle allocated to execute instruction [A+1] (row2, column 7), while in Fig. **2B**, the execution unit runs idle during the computational cycle allocated to execute instruction [A+2] (row 3, column 8). In both cases, the processor takes 3 pipeline slots (rows 1-3) to resolve the conditional path and the execution unit runs idle for at least one computational cycle.

Figs. **2C** and **2D** show processor operations for executing a plurality of mutually exclusive alternative instructions in a program memory unit (e.g., program memory unit **3** of Fig. **1**) using a single execution unit (e.g., execution unit **11** of Fig. **1**) according to embodiments of the present invention. Fig. **2A** depicts the same scenario as Fig. **2C**, in which value [a] is not less than value [b] and the 'less than' flag is false (1t==0) and Fig. **2D** depicts the same scenario as Fig. **2B**, in which value [a] is less than value [b] and the 'less than' flag is true (1t=1).

As described above, instruction [A], 'eu.cmp a,b,' does not depend on any condition and once the instruction is issued, the execution unit may always execute instruction [A] to completion. As in conventional systems, since a single execution unit typically only has the hardware capabilities to execute one instruction in each computational cycle, the processor may store instruction [A] individually in the program memory unit at a memory address (e.g., 100). The dispatch unit may individually issued the instruction to the execution unit, and the execution unit may individually execute the instruction (e.g., using the separate pipeline slot of row 1).

Subsequent instructions [A+1], 'eu.add d,e,c ? 1t,' and [A+2], 'eu.mpy d,e,c ? !1t,' are alternative mutually exclusive instructions such that only one of the instructions may be executed, for example, based on the outcome, true (1t==1) or false (t==0), of instruction [A]. According to embodiments of the invention, the dispatch unit may combine and issue instructions together when they are mutually exclusive, for example, when no more than one of the instructions may be executed for any outcome. Since instructions [A+1] and [A+2] are mutually exclusive, the dispatch unit may combine may be combined into a single instruction set [A+1*], for example, 'eu.add d,e,c ? 1t ∥ eu.mpy d,e,c ? !1t.' The processor may store the single instruction set [A+1*] at a single memory address in the program memory unit (e.g., memory location **10** of Fig. **1**), for example, address 101 (row 2, in the column labeled "address").

In pipeline stage IF1 (row 2, column 1), a fetch unit (e.g., fetch unit **12** of Fig. **1**) may access the program memory address (101) to locate combined instruction set [A+1*]. The fetch unit may retrieve the combined instruction set [A+1*] from the program memory address in the next sequential stages IF2 (row 2, column 2) and store the combined instruction set [A+1*] in a memory unit accessible to the dispatch unit (e.g., memory address **14** accessible to dispatch unit **6** of Fig. **1**). According to embodiments of the invention, the dispatch unit may issue all the instructions stored in the single memory address (including the plurality of instructions [A+1] and [A+2] in the combined instruction set [A+1*]) to the execution unit in dispatch stage D1 (row 2, column 3). The dispatch unit may then decode the combined instruction set [A+1*] in decode stage D2 (row 2, column 4).

When combined instruction set [A+1*] is in the decode stage D2 (row 2, column 4), the processor may determine the actual outcome of the comparison of instruction [A] (e.g., the execution unit may update a flag from register file **9** of Fig. **1** corresponding to instruction [A]). The execution unit may execute the single instruction [A+1] or [A+2] which corresponds to the actual outcome of the comparison.

In Fig. **2C**, the flag is false (1t==0) and the execution unit may execute corresponding instruction [A+2], 'eu.mpy d,e,c,' (row 2, column 5 bottom entry) and annul instruction [A+1], 'eu.add d,e,c,' (row 2, column 5 top entry). The execution unit may proceed to process [A+2], 'eu.mpy d,e,c,' until completion (e.g., in the E4 pipeline stage - row 2, column 10).

In Fig. **2D**, the flag is true (1t==1) and the execution unit may execute corresponding instruction 'eu.add d,e,c' (row 2, column 5 top entry) and annul instruction 'eu.mpy d,e,c' is (row 2, column 5 bottom entry). The execution unit proceed to process 'eu.add d,e,c' until completion (e.g., in the E4 pipeline stage - row 2, column 10).

In both Figs. **2C** and **2D**, the 'less than' flag must be either true (1t==1) or false (1t==0), but not both true and false. Thus, regardless of the outcome of instruction [A], the execution unit may execute one instruction and discard the other, handling both instructions simultaneously in a single computational cycle. In one embodiment, the processor may annul instructions prior to the instruction's execution stage (El), for example, in pipeline stage (D3).

In contrast with the conventional systems described in reference to Figs. **2A** and **2B**, in which a conventional processor uses 3 pipeline slots (rows 1-3) to resolve the conditional path and the execution unit runs idle for at least one computational cycle, in both scenarios in Figs. **2C** and **2D**, a processor operating according to embodiments of the invention (e.g., processor **1** of Fig. **1**) may use 2 pipeline slots (rows 1 and 2), for example, one less than in conventional systems, to resolve the conditional path, during which the execution unit does not run idle.

It may be appreciated that operating capabilities described using a single execution in reference to Figs. **2A** - **2D** may be multiplied by using multiple execution units, especially execution units of the same type running in parallel, such as two or more ALUs. However, it may also be appreciated that simply adding multiple execution units running in parallel to conventional systems to achieve simultaneous instruction handling cannot provide the distinct advantages of embodiments of the invention, in which a plurality of instructions are simultaneous handled within a single execution unit in a single computational cycle.

Since the dispatch unit issues a combined instruction set [A+1*] of Figs. **2C** and **2D** that includes alternative instructions [A+1] and [A+2] corresponding to all possible outcomes of a condition, for example, a flag being either true (T) or false (F), the execution unit may execute exactly one of the alternative instructions. However, it may be appreciated that in other examples, a combined instruction set may include some, but not all possible alternative instructions. In one such example, the program memory stores four instructions that depend on four mutually exclusive outcomes of a condition, for example, indicated by two flags, which may be, for example, TT, TF, FT, and FF. Only one of the four outcomes may be correct and accordingly the execution unit may only execute the corresponding one of the four alternative solutions to completion. If the dispatch unit combines and issues four instructions in two sets of two instructions, only one combined pair of instructions may include an executable instruction, while the other combined pair of instructions may have no valid executable instruction. When processing the pair with no valid instruction, the execution unit may run idle during the computational cycle allocated for executing the instruction pair. However, the number of idle cycles may be reduced since the execution unit executes multiple invalid instructions together according to embodiments of the invention. In the example of four alternative instructions, a conventional system would allocate an individual time slot to each of the three invalid instructions and an execution unit would run idle for three computational cycles. In contrast, an execution unit operating according to embodiments of the invention may process the same three invalid instructions in two pipeline slots, for example, handling two invalid instructions together and the third invalid instructions in combination with the forth valid instruction. The execution unit may run idle for only one computational cycle allocated for executing the pair having no valid instruction, thereby reducing the idle time by two computational cycles.

The dispatch unit may combine and issue a sequence of alternative or mutually exclusive instructions, [A+1], [A+2], [A+3], ..., and [A+m], in any combinatorial manner. In some embodiments, dispatch unit may combine each and every alternative instruction into a single combined instruction set and may issue the instruction set together to the execution unit. Accordingly, the execution unit may process all combined instructions together, for example, in a single execution cycle. When the dispatch unit may combines each and every alternative instruction, the combined set may include the correct one of the alternative instructions and the execution unit may resolve the instruction path in a single computational cycle, for example, regardless of the number of combined alternative instructions.

In another embodiment, the combined instruction set may be limited to a maximum size or maximum number of instructions, for example, due to a limit in the size of the register or memory unit where they are stored together. In one embodiment, the dispatch unit may combine and issue a plurality of alternative instructions in a plurality of groups or sub-sets, for example, each including a number of instructions equal to or less than a predetermined number, for example, two, four, ten, etc. In another embodiment, the dispatch unit may combine the instructions into sub-sets, for example, to split the instructions among multiple execution units, for example, operating in parallel, or to combine related or similar instructions based on the type of instruction, etc.

In one embodiment, the dispatch unit may combine instructions in the order in which they are sequenced in a program memory or process. In one example, for a set of 2ⁿ alternative instructions, the dispatch unit may issue the instructions in combined sub-sets of 2 alternative instructions, where instructions [1] and [2] form a first combined instruction sub-set, instructions [3] and [4] form a second combined instruction sub-set, ..., and instructions [2ⁿ-1] and [2ⁿ] form the 2ⁿ⁻¹ combined instruction sub-set. In another example, the dispatch unit may combine the 2ⁿ alternative instructions into sub-sets of 4 alternative instructions, where instructions [1]-[4] form a first combined instruction sub-set, instructions [5]-[8] form a second combined instruction sub-set, ..., and instructions [2ⁿ-3] -[2ⁿ] form the 2ⁿ⁻² combined instruction sub-set. It is clear that the larger the number of instructions that the dispatch unit combines in each sub-set, the fewer the number of combined instruction sets that the execution unit may execute to resolve the instruction path.

In another embodiment, the dispatch unit may combine some or all of the instructions in a different order from that which they are originally sequenced. For example, the dispatch unit may combine instructions in order of their priority or size. In yet another embodiment, dispatch unit may combine instructions based on the execution unit to which they are issued. For example, sequenced instructions [1], [3], [4], and [7] may be arithmetic type instructions and the dispatch unit may combine and issue the instructions together to an ALU, sequenced instructions [2] and [5] may be load/store operations and the dispatch unit may combine and issue the instructions together to a LSU, and sequenced instruction [6] may be a branch type instruction and the dispatch unit may combine and issue the instruction individually to a PCU. In yet another embodiment, the dispatch unit may combine instructions randomly or by any other requirement or criterion.

Regardless of how the dispatch unit combines instructions or in what order or group sizes, as long as the dispatch unit combines at least two alternative instructions, the execution unit may execute the correct instruction in fewer computational cycles. In fact, the reduction in the number of computational cycles that the execution unit uses to resolve the conditional path may be equal to the number of instructions that the dispatch unit combines. Thus, the greater the number of instructions that the dispatch unit combines, the fewer cycles needed to resolve the conditional path. Accordingly, embodiments of the invention provide a significant increase in computational efficiency as compared with conventional systems, in which a dispatch unit issues each instruction individually in a separate computational cycle to an execution unit, which in turn uses a number of computational cycles equal to the number of possible alternative instructions to resolve the conditional path.

Although embodiments of the invention describe a dispatch unit combining instructions that depend on a common condition, the dispatch unit may combine any plurality of instructions as long as at most one, but not two or more, of the instructions are to be executed at a time. Such a condition is necessarily met by, for example, a set ofpredicted and non-predicted instructions succeeding a conditional branch instruction or, as discussed, instructions corresponding to mutually exclusive alternatives to the same condition. Although the dispatch unit may issue only one executable instruction to an execution unit in each cycle, the dispatch unit may combine the one executable instruction with any number of non-executable or incorrect instructions (for example, limited only by the process workflow or the storage resources of the execution unit's register). When the dispatch unit issues a plurality of correct or executable instructions are simultaneously issued to the execution unit, the process may experience time delays.

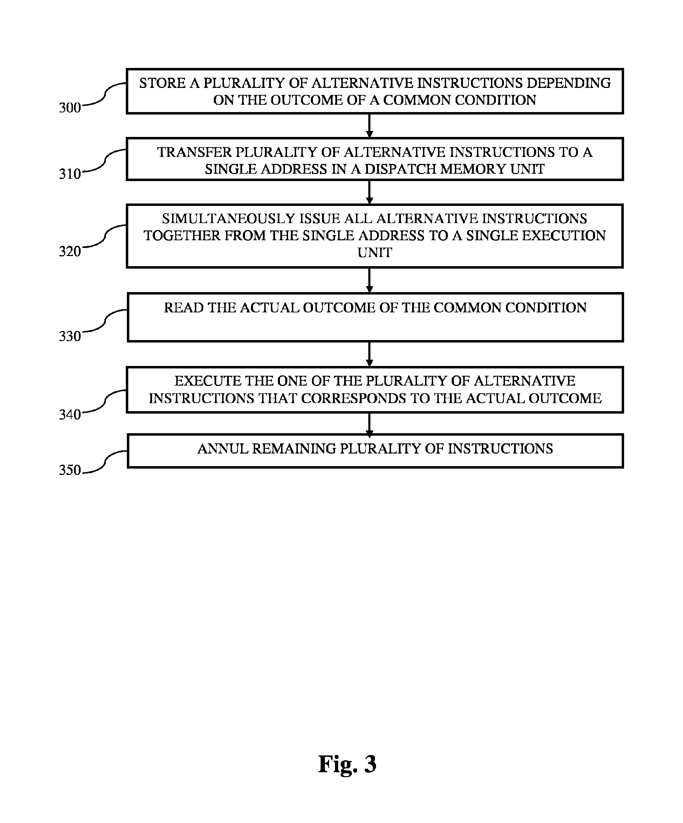

Reference is made to Fig. **3**, which is a flowchart of a method in accordance with embodiments of the invention.

In operation **300**, a program memory unit (for example, program memory unit **3** of Fig. **1**) may store a sequence of instructions (for example, instructions A, A+1, A+2, ... of Figs. **2A**-**2D**). Two or more of the instructions may be mutually exclusive alternative instructions such that only one of the instructions may be executed, for example, based on the outcome of a common condition. The alternative instructions may be stored together at a single memory address in the program memory unit (e.g., memory location **10** of Fig. **1**) or separately (e.g., in respective memory locations **10** and **13** of Fig. **1**).

In operation **310**, a fetch unit (e.g., fetch unit **12** of Fig. **1**) may access the program memory unit to retrieve the plurality of mutually exclusive alternative instructions from the program memory address(es) and store them in a memory unit accessible to the dispatch unit (e.g., memory address **14** accessible to dispatch unit **6** of Fig. **1**).

In operation **320**, the dispatch unit may issue all the instructions stored at each memory address to a single execution unit (e.g., execution unit **11** of Fig. **1**). Depending on the instruction function, the instructions may be issued to an ALU, PCU, and/or LSU. The instructions may be sub-divided among the multiple types of execution units.

In operation **330**, the execution unit may read the actual outcome of the common condition on which the mutually exclusive alternative instructions depend. The actual outcome of the common condition may be indicated by one or more flags, predicate registers, and/or mode registers. The common condition may be the result of the executing unit executing another instruction in a previous cycle, a comparison, a timer or counter exceeding a predetermined value, or any other condition.

In operation **340**, the execution unit may execute the one of the plurality of mutually exclusive alternative instructions that corresponds to the actual outcome and may annul the remaining instructions. The execution unit may process the one instruction to completion. The execution unit may process the one instruction to completion.

In operation **350**, the execution unit may annul the remaining plurality of instructions.

Other operations or series of operations may be used.

Embodiments of the invention may include an article such as a computer or processor readable medium, or a computer or processor storage medium, such as for example a memory, a disk drive, or a USB flash memory, encoding, including or storing instructions which when executed by a processor or controller, carry out methods disclosed herein.

Although the particular embodiments shown and described above will prove to be useful for the many distribution systems to which the present invention pertains, further modifications of the present invention will occur to persons skilled in the art. All such modifications are deemed to be within the scope and spirit of the present invention as defined by the appended claims.

## Claims

1. A method for processing digital data, comprising:
at a dispatch unit, simultaneously issuing a plurality of instructions to an execution unit, wherein the instructions correspond to different mutually exclusive outcomes of a common condition;
at a processor, determining the actual outcome of the common condition; and
at the execution unit, executing the one of the plurality of instructions which corresponds to the actual outcome of the condition and discarding the remaining simultaneously issued instructions.

2. The method of claim 1, wherein the plurality of instructions correspond to alternative paths succeeding a comparison or a conditional branch instruction.

3. The method of either of claims 1 and 2, wherein the plurality of instructions are stored together in a memory unit at a single memory address from which both are retrieved to be issued together in a single computational cycle.

4. The method of any preceding claim, wherein the plurality of instructions are transferred from a respective plurality of addresses in a program memory to a single address in a memory accessible by the dispatcher.

5. The method of any preceding claim, wherein the outcome of the condition is indicated by a flag or predicate register stored in a register file, and the execution unit reads the flag or predicate register to determine which one of the instructions corresponds to the actual outcome of the condition.

6. The method of any preceding claim, wherein the execution unit executes at most one instruction in a single computational cycle.

7. The method of any preceding claim, wherein the plurality of instructions are issued in a very long instruction word (VLIW) packet.

8. A processor for processing digital data, comprising:
an execution unit; and
a dispatch unit, wherein the dispatch unit is to simultaneously issue a plurality of instructions to the execution unit, wherein the plurality of instructions correspond to different mutually exclusive outcomes of a common condition, wherein the processor is to determine the actual outcome of the common condition, and wherein the execution unit is to execute the one of the plurality of instructions which corresponds to the actual outcome of the condition and discard the remaining simultaneously issued instructions.

9. The processor of claim 8, wherein the plurality of instructions correspond to alternative paths succeeding a comparison or a conditional branch instruction.

10. The processor of either of claims 8 and 9, wherein the plurality of instructions are stored together in a memory unit at a single memory address from which both are retrieved to be issued together in a single computational cycle.

11. The processor of any of claims 8 to 10, wherein the plurality of instructions are transferred from a respective plurality of addresses in a program memory to a single address in a memory accessible by the dispatcher.

12. The processor of any of claims 8 to 11, wherein the execution unit executes at most one instruction in a single computational cycle.

13. A system for processing digital data, comprising:
a processor as claimed in any of claims 8 to 12
